# EUROPEAN PATENT SPECIFICATION

(11) **EP 1 989 253 B1**
(45) Date of publication and mention of the grant of the patent: **02.10.2013**
(21) Application number: 07737336.3
(22) Date of filing: 16.02.2007
(51) Int. Cl.: C08K 9/10, C08J 3/14

(54) **CURABLE SILICONE RESIN COMPOSITION AND CURED BODY THEREOF**
HÄRTBARE SILIKONHARZZUSAMMENSETZUNG UND HARTKÖRPER DARAUS
COMPOSITION DE RESINE DE SILICONE DURCISSABLE ET CORPS DURCI A PARTIR DE CELLE-CI

(30) Priority: 01.03.2006 JP 2006055086
(43) Date of publication of application: 12.11.2008
(73) Proprietor: Dow Corning Toray Co., Ltd., Tokyo, 100-0004 (JP)
(72) Inventor: YOSHITAKE, Makoto, Ichihara-shi, Chiba 2990108 (JP); TAKEUCHI, Kasumi, Ichihara-shi, Chiba 2990108 (JP); NAKANISHI, Koji, Ichihara-shi, Chiba 2990108 (JP)
(74) Representative: Gillard, Richard Edward
(86) International application number: PCT/JP2007/053347
(87) International publication number: WO 2007/099863

(56) References cited:
- EP-A2- 0 661 349
- US-A- 5 153 238

## Description

### Technical Field

The present invention relates to a curable silicone resin composition and to a cured body of the aforementioned composition. More specifically, the invention relates to a hydrosilylation-curable silicone resin composition which is solid or in a powdered form at room temperature, melts when heated, is suitable for transfer and injection molding, and can be used for forming cured bodies of high strength and does not noticeably change color under the effect of heat and ultraviolet radiation.

### Background Art

Hydrosilylation-curable silicone resin compositions comprising an organopolysiloxane having in one molecule at least two unsaturated aliphatic hydrocarbon groups; an organopolysiloxane having in one molecule at least two silicon-bonded hydrogen groups; and a platinum-type catalyst, are well known in the art. However, in a majority of cases, such compositions are either liquid or putty-like at room temperature. Furthermore, such compositions are unsuitable for transfer molding or injection molding. In view of the above, Japanese Unexamined Patent Application Publication (hereinafter referred to as "Kokai") S50-80356 and Kokai S51-34259 disclose hydrosilylation-curable silicone resin compositions which are solid or in a powdered form at room temperature, melt when heated, and suitable for transfer and injection molding.

However, although the curable silicone resin compositions disclosed in Kokai S50-80356 and Kokai S51-34259 are solid at room temperature, due to activity of the platinum-type catalyst the aforementioned compositions are subject to accelerated curing, possess low stability in storage, and cure very quickly under the effect of heat. Furthermore, the compositions have poor reproducibility in transfer molding and injection molding, and in order to improve storage stability and reproducibility in molding, the compositions should be combined with a large amount of hydrosilylation reaction inhibitors, which, in turn, cause change of color and reduce thermal stability in molded products. For the above reasons, the use of the aforementioned curable silicone resin compositions as sealing agents for light-emitting diodes is associated with problems.

US 5,153,238 discloses storage stable organosiloxane compositions in the form of flowable powders which are prepared by blending a high consistency polydiorganosiloxane into a quantity of fluidized reinforcing filler that is heated to a temperature of from 100° to 200° C, prior to or immediately following introduction of the polydiorganosiloxane. The resultant mixture is heated while being subjected to shearing forces that reduce its average particle size to achieve a flowable powder.

EP 0 661 349 discloses a thermosetting silicone composition which is comprised of (a) a diorganopolysiloxane containing alkenyl groups, (b) an organohydrogenpolysiloxane, (c) a platinum catalyst-containing silicone resin fine particle catalyst comprised of (i) a thermoplastic silicone resin containing 5 to 90 moles% PhSiO_{3/2} siloxane units and 5 to 20 mole% MeViSiO_{2/2} siloxane units, wherein Ph denotes phenyl, Me denotes methyl and Vi denotes vinyl; said resin having a glass transition point of 40 to 70 °C and (ii) 0.05 to 2 wt% as platinum atoms of a platinum catalyst; and (d) a hydrosilation reaction inhibiting compound.

It is an object of the present invention to provide a hydrosilylation-curable silicone resin composition which is solid or in a powdered form at room temperature, melts when heated, is suitable for transfer and injection molding, and is suitable for molding into a cured body that possesses high strength and insignificantly change color under the effect of heat or ultraviolet radiation. Another object is to provide the aforementioned cured body that possesses high strength and does not essentially change color under the effect of heat or ultraviolet radiation.

### Disclosure of Invention

The above objects are achieved by providing a hydrosilylation-curable silicone resin composition having a melting point of 50°C or higher, and has a melt viscosity at 150°C of 5,000 mPa·s of higher, comprising a fine thermoplastic resin powder that contains a platinum-type catalyst. The objects are also achieved by providing a cured body obtained from the above composition.

### Effects of Invention

The curable silicone resin composition of the invention is characterized by the fact that it is a solid or in a powdered form at room temperature, melts when heated, is suitable for transfer and injection molding, and is suitable for molding into a cured body that possesses high strength and is not subject to significant change of color under the effect of heat or ultraviolet radiation. The cured body obtained by curing the aforementioned composition possesses high strength and does not significantly change color under the effect of heat or ultraviolet radiation.

### Detailed Description of the Invention

The hydrosilylation-curable silicone resin composition of the invention is characterized by containing a fine thermoplastic resin powder that contains a platinum-type catalyst. Such a fine thermoplastic resin powder that contains a platinum-type catalyst is a catalyst for acceleration of curing caused by a hydrosilylation reaction. The platinum-type catalyst may be in the form of microparticles dispersed or fused in a thermoplastic resin, or in the form of encapsulated microparticles composed of a platinum-catalyst type cores in thermoplastic-resin shells. The platinum-type catalyst may be exemplified by platinum black, platinum on a finely powdered carbon carrier, platinum on a finely powdered silica carrier, platinic chloride, alcohol-modified platinic chloride, platinum-olefin complex, or a platinum-alkenylsiloxane complex. There are no special restrictions with regard to the type of the aforementioned thermoplastic resin, provided that it is not permeated by the platinum-type catalyst at least during storage and that it practically does not dissolve in the organopolysiloxane of the main component of the composition. The aforementioned thermoplastic resin preferably is exemplified by a silicone resin, polysilane resin, acrylic resin, methylcellulose, and a polycarbonate resin. It is recommended that the thermoplastic resin of the invention has a softening or a glass-transition point in the range of 40 to 200°C. The softening point is the one at which the resin begins to flow under its own gravity or under the effect of surface tension. The melting point can be measured by observing the ground particles of the resin under a microscope while gradually heating the particles at a constant heating rate. The glass transition point can be measured with the use of a differential scanning calorimeter (DSC). It is recommended that either one of the softening point or the glass transition point be in the range of 40 to 200°C. If the softening point or the glass transition point is below 40°C, this will significantly lower stability of the composition in storage. If, on the other hand, the softening point or the glass transition point exceeds 200°C, it will be difficult to obtain a sufficient rate of thermal curing. Also, there are no special restrictions with regard to the average size of the fine thermoplastic resin powder that contains a platinum-type catalyst, but it may be recommended to use particles in the range of 0.1 to 500 µm, preferably, 0.3 to 100 µm. This is because the fine catalyst-containing particles of the thermoplastic resin with dimensions smaller than the recommended lower limit are difficult to prepare, and if the size of the particles exceeds the recommended upper limit, this will impair dispersibility of the particles in the curable silicone resin composition.

There are no special restrictions with regard to the method that can be used for preparing the aforementioned fine powder of the thermoplastic resin that contains a platinum-type catalyst. Examples of the methods suitable for this purpose are interfacial polymerization, in-situ polymerization, or a similar chemical process, as well as coaservation, a drying-in-liquid method, or a similar physical or mechanical method. The drying-in-liquid method or drying-in-gaseous-phase method is most preferable since this is suitable for the simple preparation of fine microcapsulated particles with narrow grain size distribution. The particles obtained by the above methods can be used as they are, but, if necessary, for removal of the platinum-type catalyst stuck to the surface of the particles, they can be washed with an appropriate cleaning solvent. Such a treatment is desirable for obtaining a curable silicone resin composition with excellent storage stability. What is meant under the term "appropriate cleaning solvent" is a solvent that does not dissolve the thermoplastic resin but dissolves the platinum-type catalyst. Examples of such solvents are the following: methyl alcohol, ethyl alcohol, or similar alcohols, hexamethyldisiloxane, or similar low-molecular-weight organopolysiloxanes, etc. There are no special restrictions with regard to the ratio of the hydrosilylation catalyst to the thermoplastic resin, and this ratio greatly varies depending on the method of manufacturing of the powder material. In general, however, the content of the platinum-type catalyst relative to the thermoplastic resin should be no less than 0.01 mass %. If the content of the platinum-type catalyst is lower than 0.01 mass %, this will lead to the increase of the fine thermoplastic resin powder that contains the platinum-type catalyst in the composition, and this will lead to the loss of physical properties of a cured body obtained from the composition.

There are no special restrictions with regard to the amount in which the fine thermoplastic resin powder that contains a platinum-type catalyst can be used but it can be recommended that in terms of mass units this powder be use in such an amount that the content of the metallic platinum be in the range of 0.1 to 2,000 ppm, preferably 1 to 1,000 ppm, per total mass of the composition. If the platinum-containing powder is added in an amount less than the recommended lower limit, this will create problems for curing the composition, and if, on the other hand, the used amount of the powder exceeds the recommended upper limit, this will not noticeably improve the curing conditions.

The composition of the invention is characterized by having a softening point of 50°C or higher and a melt viscosity at 150°C of 5,000 mPa·s or higher. This means that at room temperature the composition is a solid substance or a powder and that it softens when heated to a temperature of 50°C or higher. The fact that the melt viscosity of the composition at 150°C is 5,000 mPa·s or higher makes the composition suitable for transfer or injection molding.

For example, the composition may comprise at least the following components:
(A) an organopolysiloxane having in one molecule at least two unsaturated aliphatic hydrocarbon groups;
(B) an organopolysiloxane having in one molecule at least two silicon-bonded hydrogen groups {wherein the silicon-bonded hydrogen groups of component (B) are contained in an amount of 0.1 to 10 moles per 1 mole of the unsaturated aliphatic hydrocarbon groups of component (A)}; and
(C) a fine thermoplastic resin powder that contains a platinum-type catalyst (wherein in terms of mass units the content of metallic platinum in the fine powder is in the range of 0.1 to 2,000 ppm per total mass of the composition).

Component (A) is an organopolysiloxane having in one molecule at least two unsaturated aliphatic hydrocarbon groups. There are no special restrictions with regard to the molecular structure of this component, and it may have a linear, partially-branched linear, or a branched molecular structure, of which the branched structure is most preferable. Component (A) is represented by the following average structural formula:

R¹ₐSiO_{(4-a)/2}.

In this formula, R¹ is an optionally substituted univalent hydrocarbon group, alkoxy group, or a hydroxyl group. Examples of the univalent hydrocarbon groups are the following: methyl, ethyl, propyl, isopropyl, butyl, isobutyl, tert-butyl, pentyl, neopentyl, hexyl, cyclohexyl, octyl, nonyl, decyl, or similar alkyl groups; vinyl, allyl, propenyl, isopropenyl, butenyl, hexenyl, octenyl, or similar alkenyl groups; cyclohexenyl, cycloheptenyl, or similar cycloalkenyl groups; phenyl, tolyl, xylyl, naphthyl, or similar aryl groups; benzyl, phenylethyl, phenylpropyl, or similar aralkyl groups; and 3-chloropropyl, 2-bromoethyl, 3,3,3-trifluoropropyl, or similar halogen-substituted alkyl groups. At least two R¹'s in one molecule should be unsaturated aliphatic hydrocarbon groups, preferably the aforementioned alkenyl groups. In the above formula, "a" is a number that satisfies the following condition: 1 ≤ a < 2.

Introduction of phenyl groups into the organopolysiloxane of the above formula is most efficient for obtaining a cured body with a high refractive index. In particular, a phenyl-containing organopolysiloxane of the following average structural formula can be used for this purpose:

R¹ₚ(C₆H₅)_{q}SiO_{(4-p-q)/2}.

In this formula, R¹ is the same as defined above; "p" and "q" are numbers that satisfy the following condition: 1 ≤ (p + q) < 2, preferably 1 ≤ (p + q) ≤ 1.8, and most preferably 1 ≤ (p+q) ≤ 1.5. Furthermore, the following conditions have to be satisfied: 0.20 ≤ q / (p + q) ≤ 0.95, preferably 0.30 ≤ q / (p + q) ≤ 0.80, and most preferably 0.45 ≤ q / (p + q) ≤ 0.70.

The following methods can be used for the preparation of component (A):
1) co-hydrolysis and condensation, e.g., of a phenyltrichlorosilane and alkenyl-containing chlorosilane, e.g., vinyltrichlorosilane, methylvinyldichlorosilane, dimethylvinylchlorosilane, allylmethyldichlorosilane, butenylmethyldichlorosilane, methylpentenyldichlorosilane, hexenyltrichlorosilane, hexenylmethyldichlorosilane, hexenyldimethylchlorosilane, heptenylmethyldichlorosilane, methyloctenyldichlorosilane, methylnonenyldichlorosilane, decenylmethyldichlorosilane, methylundecenyldichlorosilane, dodecenylmethyldichlorosilane, if necessary, in the presence of a tetrachlorosilane, methyltrichlorosilane, dimethyldichlorosilane, or a trimethylchlorosilane;
2) co-hydrolysis and condensation of a phenyltrimethoxysilane and an alkenyl-containing alkoxysilane, e.g., vinyltrimethoxysilane, methylvinydimethoxysilane, dimethylvinylmethoxysilane, allylmethyldimethoxysilane, butenylmethyldimethoxysilane, methylpentenyldimethoxysilane, hexenyltrimethoxysilane, hexenylmethyldimethoxysilane, hexenyldimethylmethoxysilane, heptenylmethyldimethoxysilane, methyloctenyldimethoxysilane, methylnonenyldimethoxysilane, decenylmethyldimethoxysilane, methylundecenyldimethoxysilane, dodecenylmethyldimethoxysilane, if necessary, in the presence of a tetramerthoxysilane, methyltrimethoxysilane, dimethyldimethoxysilane, or a trimethylmethoxysilane;
3) condensation of silanol groups contained in the silicone resins obtained by the methods described above in the presence of acidic or basic polymerization catalysts;
4) re-equilibrium polymerization of a silicone resin composed of C₆H₅SiO_{3/2} units and a methylvinylsiloxane capped at both molecular terminals with trimethylsiloxy groups in the presence of acidic or basic polymerization catalysts;
5) re-equilibrium polymerization of a silicone resin composed of C₆H₅SiO_{3/2} units and a cyclic methylvinylsiloxane in the presence of acidic or basic polymerization catalysts;
6) re-equilibrium polymerization of a silicone resin composed of C₆H₅SiO_{3/2} units, a cyclic methylvinylsiloxane, and a cyclic dimethylsiloxane in the presence of acidic or basic polymerization catalysts;
7) re-equilibrium polymerization of a silicone resin composed of C₆H₅SiO_{3/2} units and a methylhexenylsiloxane capped at both molecular terminals with silanol groups in the presence of acidic or basic polymerization catalysts;
8) re-equilibrium polymerization of a silicone resin composed of C₆H₅SiO_{3/2} units and a cyclic hexenylmethylsiloxane in the presence of acidic or basic polymerization catalysts; and
9) re-equilibrium polymerization of a silicone resin composed of C₆H₅SiO_{3/2} units, a cyclic hexenylmethylsiloxane, and a cyclic methylvinylsiloxane in the presence of acidic or basic polymerization catalysts.

Component (B) is used in the composition as a cross-linking agent. This component is an organopolysiloxane that has in one molecule at least two silicon-bonded hydrogen atoms. There are no special restrictions with regard to the molecular structure of this component, and it may have a linear, partially-branched linear, or a branched molecular structure, of which the branched structure is most preferable. Component (B) is represented by the following average structural formula:

R²_{b}H_{c}SiO_{(4-b-c)/2}.

In this formula, R² is an optionally substituted univalent hydrocarbon group with the exception of an unsaturated aliphatic hydrocarbon group. This univalent hydrocarbon group can be exemplified by methyl, ethyl, propyl, isopropyl, butyl, isobutyl, tert-butyl, pentyl, neopentyl, hexyl, cyclohexyl, octyl, nonyl, decyl, or similar alkyl groups; phenyl, tolyl, xylyl, naphthyl, or similar aryl groups; benzyl, phenylethyl, phenylpropyl, or similar aralkyl groups; and 3-chloropropyl, 2-bromoethyl, 3,3,3-trifluoropropyl, or similar halogen-substituted alkyl groups. In the above formula, "b" and "c" are numbers that satisfy the following conditions: 0.7 ≤ b ≤ 2.1; 0.001 ≤ c ≤ 1.0; and 0.8 ≤ (b + c) ≤ 2.6 and preferably the following conditions: 0.8 ≤ b ≤ 2; 0.01 ≤ c ≤ 1; and 1 ≤ (b + c) ≤ 2.4.

Component (B) can be exemplified by the following compounds: 1,1,3,3-tetramethydisiloxane, 1,3,5,7-tetramethylcyclotetrasiloxane, methylhydrogenpolysiloxane capped at both molecular terminals with trimethylsiloxy groups, a copolymer of methylhydrogensiloxane and dimethylsiloxane capped at both molecular terminals with trimethylsiloxy groups, dimethylpolysiloxane capped at both molecular terminals with dimethylhydrogensiloxy groups, a copolymer of methylhydrogensiloxane and dimethylsiloxane capped at both molecular terminals with dimethylhydrogensiloxy groups, a copolymer of diphenylsiloxane and methylhydrogensiloxane capped at both molecular terminals with trimethylsiloxy groups, a copolymer of dimethylsiloxane, diphenylsiloxane, and methylhydrogensiloxane capped at both molecular terminals with trimethylsiloxy groups, a copolymer composed of (CH₃)₂HSiO_{1/2} units and SiO_{4/2} units, and a copolymer composed of (CH₃)₂HSiO_{1/2} units, SiO_{4/2} units, and (C₆H₅)SiO_{3/2} units.

There are no special restrictions with regard to the amounts in which component (B) can be added to the composition, but it is recommended to add this component in such an amount that the silicon-bonded hydrogen groups of component (B) constitute 0.1 to 10 moles, preferably 0.5 to 5 moles per 1 mole of the unsaturated aliphatic hydrocarbon groups of component (A). If the aforementioned mole ratio of the silicon-bonded hydrogen groups of component (B) to the unsaturated aliphatic hydrocarbon groups of component (A) is below the recommended lower limit, it will be difficult to cure the composition to a sufficient degree. If, on the other hand, the ratio exceeds the recommended upper limit, this will lead to formation of bubbles in the cured body and will impair mechanical properties of the cured body.

Component (C) is a specific component of the composition of the invention. It is a fine thermoplastic resin powder that contains a platinum-type catalyst and is used for accelerating hydrosilylation of the composition. Component (C) has been described above. There are no special restrictions with regard to an amount in which component (C) can be used in the composition, but it is recommended to add component (C) in such an amount that in terms of mass units the content of metallic platinum in the fine powder is in the range of 0.1 to 2,000 ppm, preferably, 1 to 1,000 ppm per total mass of the composition. If component (C) is used in an amount less that the recommended lower limit, it will be difficult to cure the composition, and if, on the other hand, component (C) is used in an amount exceeding the recommended upper limit, this will not noticeably improve the curing conditions.

In order to improve storage stability and handlability, the composition may be additionally combined with (D) a reaction inhibitor. Component (D) is exemplified by 2-methyl-3-butyn-2-ol, 3,5-dimethyl-1-hexyn-3-ol, 2-phenyl-3-butyn-2-ol, or similar alkyne alcohols; 3-methyl-3-penten-1-yne, 3,5-dimethyl-3-hexen-1-yne, or similar enyne compounds; 1,3,5,7-tetramethyl-1,3-5,7-tetravinyl cyclotetrasiloxane, 1,3,5,7-tetramethyl-1,3,5,7-tetrahexenyl cyclotetrasiloxane, and benzotriazole. There are no special restrictions with regard to the amount in which component (D) can be added to the composition, but in general it can be added in an considerably small amount as compared with the curable silicone resin composition that contains a platinum-type catalyst. More specifically, component (D) should be added in an amount that inhibits curing of the composition at room temperature, i.e., 0.0001 to 10 parts by mass, preferably 0.001 to 5 parts by mass per 100 parts by mass of component (A).

In the limits that are not detrimental to the purposes of the invention, the composition may contain inorganic fillers and adhesion imparting agents. The inorganic fillers are exeplified by fumed silica, precipitated silica, titanium dioxide, carbon black, alumina, quartz powder, or the like. The surfaces of filler particles can be hydrophobized with organic silicon compounds such as organoalkoxysilane, organochlorosilane, organosilazane, etc. The adhesion imparting agents can be exemplified by 3-methacryloxypropyltrimethoxysilane, 3-acryloxypropyltrimethoxysilane, or a similar acryloxy-containing organoalkoxysilane; 3-aminopropyltrimethoxysilane, or a similar amino-containing organoalkoxysilane; 3-glycidoxypropyltrimethoxysilane, or similar epoxy-containing organoalkoxysilanes, as well as other silane couplings; a product of a condensation reaction between γ-glycidoxypropyltrialkoxysilane and a dimethylpolysiloxane capped at molecular terminals with silanol groups, a product of a condensation reaction between γ-glycidoxypropyltrialkoxysilane and a methylvinylpolysiloxane capped at molecular terminals with silanol groups, and a product of a condensation reaction between γ-glycidoxypropyltrialkoxysilane and a copolymer of dimethylsiloxane and methylvinylsiloxane capped at molecular terminals with silanol groups.

There are no special restrictions with regard to the method suitable for the preparation of the composition of the invention. For example, according to one method, components (A) and (B) are dissolved in an organic solvent, the solvent is evaporated, the obtained mixture, which is solid at room temperature, is crushed, and then the powdered components are mixed with component (C). According to another method, components (A) and (B) are melted and mixed, and then after crushing at room temperature the components are compounded and mixed with component (C). If necessary, the composition can be prepared by other known methods used for the preparation of conventional paste-like or liquid curable silicone resin compositions.

The following is a more detailed description of a cured body of the invention. The cured body of the invention is obtained by curing the aforementioned curable silicone resin composition. The cured body of the invention possesses high strength and does not change its color under the effect of heat and ultraviolet radiation. Therefore, the bodies produced by curing the composition can be used for manufacturing protective and sealing materials for light-emitting diodes, as wells as for optical lenses, light guides, etc.

### Examples

The curable silicone resin composition and the cured body of the invention will now be described in more detail with reference to Application and Comparative Examples.

### [Measurement of Softening Point]

The softening point was measured by means of a melting point measurement instrument as the average temperature during the period from the moment of partial liquefaction to complete liquefaction of the powdered curable silicone resin composition.

### [Measurement of Melt Viscosity at 150°C]

This property was measures as a viscosity at 150°C by a rheometer.

### [Mechanical Strength of Cured Body]

A rod-shaped cured body was formed by transfer molding, and then flexural strength and flexural modulus of elasticity were measured according to JIS K 7171-1994 ("Determination of Flexural Properties").

### [Application Example 1]

A flake-like mixture was prepared by condensing in toluene solution 85.0 mass % of an organopolysiloxane represented by the following average unit formula:

[(CH₃)CH₂=CHSiO_{2/2}]_{0.10}[(CH₃)₂SiO_{2/2}]_{0.15}(C₆H₅SiO_{3/2})_{0.75},

13.1 mass % of an organopolysiloxane represented by the following average unit formula:

[(CH₃)₂HSiO_{1/2}]_{0.60}(C₆H₅SiO_{3/2})_{0.40},

and 1.9 mass % of a methyl-tris (1,1-dimethyl-2-propenyloxy) silane as a reaction inhibitor.

The obtained mixture was ground in a coffee mill, and 100 parts by mass of the obtained fine powder were combined and thoroughly mixed in a coffee mill with 2.5 parts by mass of a finely powdered thermoplastic silicone resin represented by the following average unit formula:

[(CH₃)₂SiO_{2/2}]_{0.22}(C₆H₅SiO_{3/2})_{0.78}

and containing 1,3-divinyl-1,1,3,3-tetramethyldisiloxane complex of platinum (0 valence) contained in an amount of 200 ppm, in terms of mass units. As a result, a powdered curable silicone resin composition was prepared. This composition had a softening point of 85°C and a melt viscosity at 150°C of 20,000 mPa·s.

The obtained powdered curable silicone resin composition was compressed and formed into pellets, and the pellets were molded by 10 min. transfer molding with subsequent secondary heat treatment for 2 hours at 170°C to form a transparent cured body. The obtained cured body had a flexural strength of 39 MPa and flexural modulus of elasticity of 1.2 GPa.

The powdered curable silicone resin composition was compressed, formed in pellets, and the pellets were held for three days in an oven at 50°C and then subjected to transfer molding for 10 min. at 170°C. The pellets resulted in a heat-treated molded body having similar properties to an untreated one.

### [Comparative Example 1]

A curable silicone resin composition was produced by the same method as in Application Example 1, except that 1,3-divinyl-1,1,3,3-tetramethyldisiloxane complex of platinum (0 valence) was used instead of the finely powdered thermoplastic silicone resin powder that contained 1,3-divinyl-1,1,3,3-tetramethyldisiloxane complex of platinum (0 valence) with 200 ppm of metallic platinum, and was added at the time of condensing in toluene solution of organopolysiloxanes. The compositions obtained in this example had melting points scattered in the range of 85°C to 120°C. A cured body could be produced by the same method as in Application Example 1. However, during transfer molding the curing process began in the injection part of the mold, and it was impossible to obtain a cured product

### [Comparative Example 2]

A solid composition was obtained by the same method as in Comparative Example 1, except that an amount of methyl-tris (1,1-dimethyl-2-propenyloxy) silane as the reaction inhibitor was 3,500 ppm. The composition appeared to be suitable for transfer molding in even after three-day retention in an oven at 50°C. However, the molded product acquired a slightly yellowish color.

### Industrial Applicability

Since the curable silicone resin composition of the invention is a solid or in a powdered form at room temperature, melts by heating, is suitable for transfer or injection molding, and produces a cured body that has high strength and does not noticeably change its color under the effect of heating and ultraviolet radiation, it is suitable for use as a moldable resin for lenses or similar optical elements, or as a protective and sealing material for light emitting diodes, etc. Since the optical material of the invention is characterized by high strength and stability against change of color under the effect of heat and ultraviolet radiation, such a material can also be used as a sealing material for lenses and optical elements.

## Claims

1. A hydrosilylation-curable silicone resin composition having a melting point of 50°C or higher and a melt viscosity at 150°C of 5,000 mPa·s or higher, comprising a fine thermoplastic resin powder that contains a platinum-type catalyst.

2. The hydrosilylation-curable silicone resin composition of Claim 1 comprising at least the following components:
(A) an organopolysiloxane having in one molecule at least two unsaturated aliphatic hydrocarbon groups;
(B) an organopolysiloxane having in one molecule at least two silicon-bonded hydrogen groups {wherein the silicon-bonded hydrogen groups of component (B) are contained in an amount of 0.1 to 10 moles per 1 mole of the unsaturated aliphatic hydrocarbon groups of component (A)}; and
(C) a fine thermoplastic resin powder that contains a platinum-type catalyst (wherein in terms of mass units the content of metallic platinum in the fine powder is in the range of 0.1 to 2,000 ppm per total mass of the composition).

3. The composition of Claim 2, wherein component (A) is an organopolysiloxane represented by the following average structural formula:
R¹ₐSiO_{(4-a)/2}
(where R¹ is an optionally substituted univalent hydrocarbon group, alkoxy group, or a hydroxyl group, with the proviso that at least two R¹'s in one molecule are unsaturated aliphatic hydrocarbon groups; and "a" is a number that satisfies the following condition: 1 ≤ a < 2).

4. The composition of Claim 2, wherein component (B) is an organopolysiloxane represented by the following average structural formula:
R²_{b}H_{c}SiO_{(4-b-c)/2}
(where R² is an optionally substituted univalent hydrocarbon group with the exception of an unsaturated aliphatic hydrocarbon group, and "b" and "c" are numbers that satisfy the following conditions: 0.7 ≤ b ≤ 2.1; 0.001 ≤ c ≤ 1.0; and 0.8 ≤ (b + c) ≤ 2.6).

5. The composition of Claim 2, further comprising (D) a reaction inhibitor added in an amount of 0.0001 to 10 parts by mass per 100 parts by mass of component (A).

6. The composition according to any of Claims 1 to 5, being used as a sealing agent for a light-emitting diode.

7. A cured body obtained by curing the composition according to any of Claims 1 to 5.

## Patentansprüche

1. Durch Hydrosilylierung härtbare Siliconharzzusammensetzung, die einen Schmelzpunkt von 50°C oder höher und eine Schmelzviskosität bei 150°C von 5 000 mPa·s oder höher aufweist, die ein feines thermoplastisches Harzpulver umfasst, das einen Katalysator vom Platin-Typ enthält.

2. Durch Hydrosilylierung härtbare Siliconharzzusammensetzung nach Anspruch 1, die mindestens die folgenden Komponenten umfasst:
(A) ein Organopolysiloxan, das in einem Molekül mindestens zwei ungesättigte aliphatische Kohlenwasserstoffgruppen aufweist;
(B) ein Organopolysiloxan, das in einem Molekül mindestens zwei Silicium-gebundene Wasserstoffgruppen aufweist {worin die Silicium-gebundenen Wasserstoffgruppen von Komponente (B) in einer Menge von 0,1 bis 10 Mol pro 1 Mol der ungesättigten aliphatischen Kohlenwasserstoffgruppen von Komponente (A) enthalten sind}; und
(C) ein feines thermoplastisches Harzpulver, das einen Katalysator vom Platin-Typ enthält (worin in Bezug auf Masseeinheiten der Gehalt an metallischem Platin in dem feinen Pulver im Bereich von 0,1 bis 2 000 ppm pro Gesamtmasse der Zusammensetzung liegt).

3. Zusammensetzung nach Anspruch 2, worin Komponente (A) ein Organopolysiloxan ist, das durch die folgende durchschnittliche Strukturformel dargestellt ist:
R¹ₐSiO_{(4-a)/2}
(worin R¹ eine optional substituierte einwertige Kohlenwasserstoffgruppe, Alkoxygruppe oder eine Hydroxylgruppe ist, mit der Maßgabe, dass mindestens zwei R¹-Gruppen in einem Molekül ungesättigte aliphatische Kohlenwasserstoffgruppen sind; und "a" eine Zahl ist, die die folgende Bedingung erfüllt: 1 ≤ a < 2).

4. Zusammensetzung nach Anspruch 2, worin Komponente (B) ein Organopolysiloxan ist, das durch die folgende durchschnittliche Strukturformel dargestellt ist:
R²_{b}H_{c}SiO_{(4-b-c)/2}
(worin R² eine optional substituierte einwertige Kohlenwasserstoffgruppe, mit Ausnahme einer ungesättigten aliphatischen Kohlenwasserstoffgruppe, ist und "b" und "c" Zahlen sind, die die folgenden Bedingungen erfüllen: 0,7 ≤ b ≤ 2,1; 0,001 ≤ c ≤ 1,0; und 0,8 ≤ (b + c) ≤ 2,6).

5. Zusammensetzung nach Anspruch 2, die weiter (D) einen Reaktionsinhibitor umfasst, der in einer Menge von 0,0001 bis 10 Massenteile pro 100 Massenteile von Komponente (A) zugegeben wird.

6. Zusammensetzung nach einem der Ansprüche 1 bis 5, die als Dichtungsmittel für eine Leuchtdiode verwendet wird.

7. Gehärteter Körper, der durch Härten der Zusammensetzung nach einem der Ansprüche 1 bis 5 erhalten wurde.

## Revendications

1. Composition de résine de silicone durcissable par hydrosilylation ayant un point de fusion de 50°C ou supérieur et une viscosité à l'état fondu à 150°C de 5 000 mPa.s ou supérieure, comprenant une poudre de résine thermoplastique fine qui contient un catalyseur de type platine.

2. Composition de résine de silicone durcissable par hydrosilylation selon la revendication 1, comprenant au moins les composants suivantes :
(A) un organopolysiloxane ayant dans une molécule au moins deux groupes hydrocarbures aliphatiques insaturés ;
(B) un organopolysiloxane ayant dans une molécule au moins deux groupes hydrogène à liaison silicium {dans lequel les groupes hydrogène à liaison silicium du composant (B) sont contenus à raison de 0,1 à 10 moles pour 1 mole des groupes hydrocarbures aliphatiques insaturés du composant (A)} ; et
(C) une poudre de résine thermoplastique fine qui contient un catalyseur de type platine (dans laquelle, en termes d'unités de masse, la teneur en platine métallique de la poudre fine est dans la gamme de 0,1 à 2 000 ppm par masse totale de la composition).

3. Composition selon la revendication 2, dans laquelle le composant (A) est un organopolysiloxane représenté par la formule structurelle moyenne suivante :
R¹ₐSiO_{(4-a)/2}
(où R¹ est un groupe hydrocarbure monovalent optionnellement substitué, un groupe alkoxy, ou un groupe hydroxyle, à la condition qu'au moins deux R¹ dans une molécule soient des groupes hydrocarbures aliphatiques insaturés ; et "a" est un nombre qui satisfait la condition suivante : 1 ≤ a <2).

4. Composition selon la revendication 2, dans laquelle le composant (B) est un organopolysiloxane représenté par la formule structurelle moyenne suivante :
R²_{b}H_{c}SiO_{(4-b-c)/2}
(où R² est un groupe hydrocarbure monovalent optionnellement substitué à l'exception d'un groupe hydrocarbure aliphatique insaturé, et "b" et "c" sont des nombres qui satisfont les conditions suivantes : 0,7 < b < 2, 1 ; 0,001 ≤ c ≤ 1, 0 ; et 0,8 ≤ (b + c) ≤ 2,6).

5. Composition selon la revendication 2, comprenant en outre (D) un inhibiteur de réaction ajouté à raison de 0,0001 à 10 parts par masse pour 100 parts par masse de composant (A).

6. Composition selon l'une quelconque des revendications 1 à 5, qui est utilisée comme agent d'étanchéité pour une diode électroluminescente.

7. Corps durci obtenu par durcissement de la composition selon l'une quelconque des revendications 1 à 5.
